# EUROPEAN PATENT SPECIFICATION

(11) **EP 3 202 627 B1**
(45) Date of publication and mention of the grant of the patent: **05.12.2018**
(21) Application number: 16154497.8
(22) Date of filing: 05.02.2016
(51) Int. Cl.: B60R 21/2338

(54) **PASSENGER AIRBAG ASSEMBLY WITH A GUIDING STRAP**
INSASSENAIRBAGANORDNUNG MIT FÜHRUNGSGURT
ENSEMBLE AIRBAG POUR PASSAGER AVEC UNE COURROIE DE GUIDAGE

(43) Date of publication of application: 09.08.2017
(73) Proprietor: Autoliv Development AB, 447 83 Vårgårda (SE)
(72) Inventor: Schock, Marc, 85757 Karlsfeld (DE); Matthias, Szeibert, 80686 München (DE)
(74) Representative: Feucker, Max Martin

(56) References cited:
- DE-A1-102014 004 186
- US-A- 5 609 363

## Description

The present invention is directed to an airbag assembly in an automotive vehicle, comprising an airbag, which in an initial state is stored in a storing position that is laterally displaced to the assumed position of the passenger, further comprising a strap, which is attached with one end to the outside of the airbag and which is further attached to the automotive vehicle at a fixing point.

A similar airbag assembly is known from DE 10 2014 004 186 A1.

A passenger airbag assembly according to the preamble of claim 1 is known from US 5,609,363. such an arrangement the initial main deploying direction of the airbag is directly towards the passengers. Furthermore, the deployed airbag with its asymmetric shape can still oscillate in the vertical direction as the strap can swivel around its fixing point within the airbag housing.

Therefore, it is an object of the present invention to solve the before described problems of the prior art. In particular it is an object of the present invention to provide an airbag assembly which provides protection even if the passenger is out of position, wherein the airbag is deployed into a prescribed position. Furthermore, a passenger airbag assembly shall be provided, with which the airbag can be stored at any position within the automotive vehicle, in particular within the instrument panel.

This object is achieved by an airbag assembly with the features of the independent claim. Preferred embodiments of the airbag assembly are provided in the dependent claims and in the description, whereas single features of the preferred embodiments can be combined individually in a technically meaningful manner.

In particular, the object is achieved by an airbag assembly with the features described at the beginning, wherein the strap extends from the stored airbag in the storing position along the assumed position of the passenger to the fixing point, which is therefore laterally offset to the storing position of the airbag, so that during deployment the strap is stretched between the fixing point and the deploying airbag and guides the airbag into its deployed position, in which the airbag is arranged in front of the assumed position of the passenger.

Preferably the airbag assembly is a passenger airbag assembly, in which the strap extends within the instrument panel from the stored airbag to the fixing point in the instrument panel. Alternatively the airbag assembly might be used for a rear seat passenger or the driver. For example, in future car designs the steering wheell might be very small or can be folded away or maybe missing at all so that the proposed airbag assembly might also apply for the person on the driver seat. In this case the airbag assembly might also be arranged within the instrument panel and the airbag could be a separate or combined airbag and might have one or multiple inflator(s).

Accordingly, the strap is not attached to the automotive vehicle at the storing position of the airbag but offset thereto. Therefore, when the airbag starts to deploy the strap can already be stretched and can guide the deployment of the airbag already at the beginning of the deployment. In particular, the stretched strap avoids in the initial phase of deployment that the airbag is only deployed in the direction towards the passenger, whereas it is enhanced that the airbag is initially also deployed to a lateral direction, so that the airbag assembly may be used for protecting passengers which are out of position.

Furthermore, as the fixing point is closer to the lateral side of the deployed airbag the movability of the deployed airbag is decreased.

As the deployment of the airbag can be altered by the location of the fixing point on the one side and the storing position of the airbag on the other side and as the fixing point might be arranged freely on the automotive vehicle and in particular on the instrument panel, the freedom for designing the automotive vehicle and in particular the instrumental panel is enhanced.

The assumed position of the passenger is for example the center of the passenger seat. Accordingly, the storing position of the airbag is displaced in particular to the left or to the right of an imaginary line extending in the longitudinal direction of the vehicle through the assumed position of the passenger. In particular, the storing position is displaced laterally to the assumed position of the passenger so far that it is not arranged directly in front of the passenger. For example, if the storing position is displaced to the left from the assumed position of the passenger the strap extends in particular within the instrument panel from the storing position to the right of the assumed position of the passenger. Preferably the fixing point is displaced from a point on the instrument panel directly ahead of the passenger to the outer side of the instrument panel.

The strap is preferably arranged in a gap within the instrument panel, which gap extends from the storing position of the airbag to the fixing point of the strap. During assembling of the vehicle the strap might already be installed within the gap of the instrumental panel and might be connected to the outside of the airbag after the airbag is installed in its storing position within the instrument panel.

In order that the strap cannot be seen within the instrumental panel and in particular within the gap of the instrumental panel, the strap is covered by a covering, a decoration fillet or a step of the instrument panel. This means, that the strap is covered by a deco of the instrument panel which deco is already known from current instrument panels.

It is possible that the strap is fixed with the one end to the outer side of the airbag and with the other end to the fixing point on the vehicle, in particular on the instrument panel. Alternatively, the strap might be fixed with both ends to the outside of the airbag and extends as a loop to the fixing point, where the strap is attached to the automotive vehicle. In a further embodiment the strap might be formed also as a loop, where it is attached to the airbag, thereby enhancing the flexibility of the strap during deployment.

Preferably, the storing position of the airbag is in or near the center of the instrument panel, in particular in the middle between the driver and the passenger and the fixing point of the strap is near the lateral outer side of the instrument panel. Therefore, the space usually occupied by the stored airbag directly in front of the passenger might be used for other parts or might be designed in a suitable manner.

As the storing position of the airbag is laterally displaced to the assumed position of the passenger the deployed airbag has preferably an asymmetric shape in relation to its storing position, so that it extends in the deployed state from the laterally offset storing position in front of the assumed position of the passenger.

The strap might be made of any suitable material. Such straps are also known as tethers.

In order to enhance the stability of the deployed airbag the length of the strap between the attachment to the airbag and the fixing point is chosen such that in the deployed state the deployed airbag is pressed against a surface of the automotive vehicle. Due to the friction between the deployed airbag and the surface of the vehicle the movability of the airbag is declined. The fixing point is usually so far offset from the storing position of the airbag that the strap is already stretched in the initial state.

Preferably the strap is fixed to the airbag at such a location that in the deployed state the attachment of the strap to the airbag is arranged on a point lying on a lateral edge of the airbag which faces the passenger. This way it is avoided that during the initial deployment the edge of the airbag deploys only in the direction towards the passenger and not to a lateral side. With the proposed location of the strap attachment to the airbag it is made sure that the airbag already during the initial deployment expands in a lateral direction.

The invention and the technical field are described in the following with reference to the figures. The figures show schematically
- Fig. 1:: a top view on a passenger airbag assembly in the initial state,
- Fig. 2:: the top view on the passenger airbag assembly after deployment,
- Fig. 3:: a front view onto the passenger airbag assembly in the initial state and
- Fig. 4:: a top view on a further embodiment of the passenger airbag assembly after deployment.

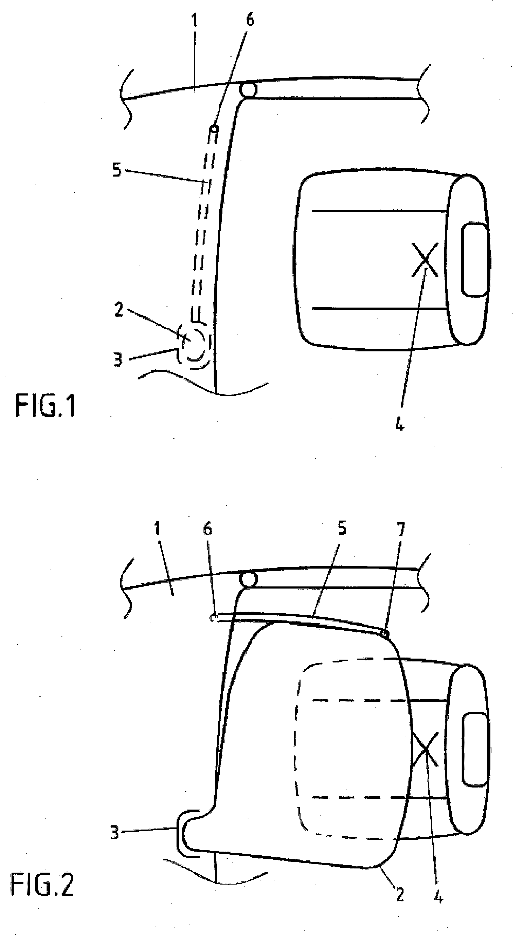

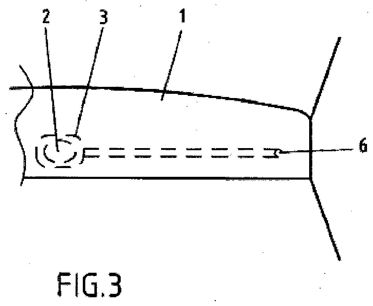

Fig. 1 and fig. 3 show the passenger airbag assembly in an initial state. The passenger airbag assembly comprises an airbag 2 and a strap 5, which are arranged in an instrument panel 1. As can be seen from fig. 1 and 3 the airbag is not stored directly in front of an assumed position 4 of the passenger. The airbag 2 is stored in a storing position 3 which is displaced to the left from the assumed position 4 towards the center of the instrument panel 1. The strap 5 is connected to the outside of the airbag 2 and is arranged in a gap within the instrument panel 1. The strap 5 and the gap extend from the storing position 3 to a fixing point 6 on the instrument panel 1, at which the strap 5 is attached to the instrument panel 1. As can be seen from the dotted lines the airbag 2 and the strap 5 are arranged beneath a surface of the instrument panel 1.

Fig. 2 shows the passenger airbag assembly in a deployed state. The deployed airbag 2 has an asymmetric shape. It can be seen that the strap 5 is connected to the outside of the airbag 2 at an attachment 7 and extends tightly between the fixing point 6 and the attachment 7. Due to the length of the strap 5 the airbag 2 is pushed against the surface of the instrument panel 1. The airbag 2 is deployed in front of the assumed position 4 of the passenger while the strap 5 was stretched during the deployment and guided the airbag 2 in its position in front of the assumed position 4 of the passenger.

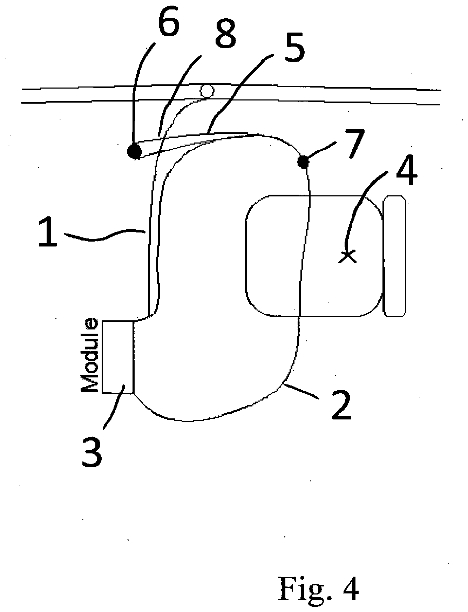

The embodiment of fig. 4 differs from the above described embodiment in that the strap 5 is not fixedly attached to instrument panel 1. The strap 1 is formed as a loop 8 at the attachment to the instrument panel 1, whereby the flexibility of the strap 5 during deployment is enhanced. Therefore, the strap 5 is extending in a double layered manner between the fixing point 6 and the attachment 7. For further enhancing the flexibility the strap 5 might be attached to the airbag in a loop as well.

### Reference List

- 1: instrument panel
- 2: airbag
- 3: storing position
- 4: assumed position
- 5: strap
- 6: fixing point
- 7: attachment
- 8: loop

## Claims

1. Airbag assembly in an automotive vehicle, comprising an airbag (2), which in an initial state is stored in a storing position (3) that is laterally displaced to the assumed position (4) of the passenger, further comprising a strap (5), which is attached with one end to the outside of the airbag (2) and which is further attached to the automotive vehicle at a fixing point (6), wherein the strap (5) extends from the stored airbag in the storing position (3) along the assumed position (4) of the passenger to the fixing point (6), so that during deployment the strap (5) is stretched between the fixing point (6) and the deploying airbag (2) and guides the airbag (2) into its deployed position, in which the airbag (2) is arranged in front of the assumed position (4) of the passenger, whereby the storing position (3) of the airbag (2) is in or near the center of an instrument panel (1) and **characterized in that** the fixing point (6) of the strap (5) is near the lateral outer side of the instrument panel (1) laterally offset to the storing position (3) of the airbag (2).

2. Airbag assembly according to claim 1, wherein the deployed airbag (2) has an asymmetric shape in relation to its storing position (3).

3. Airbag assembly according to one of the preceding claims, wherein the strap (5) is fixed with both ends to the outside of the airbag (2) and extends as a loop (8) to the fixing point (6).

4. Airbag assembly according to one of the preceding claims, wherein in the initial state the strap (5) is arranged in a gap in an instrument panel (1) extending from the storing position (3) of the airbag (2) to the fixing point (6) of the strap (5).

5. Airbag assembly according to claim 4, wherein the strap (5) is covered by a covering, a decoration fillet or a step of the instrument panel (2).

6. Airbag assembly according to one of the preceding claims, wherein the length of the strap (5) between an attachment (7) to the airbag (2) and the fixing point (6) is chosen such that in the deployed state the deployed airbag (2) is pressed against a surface of a part of the automotive vehicle.

7. Airbag assembly according to one of the preceding claims, wherein in the deployed state the attachment (7) of the strap (5) to the airbag (2) is arranged on a point lying on a lateral edge of the airbag (2) which faces the passenger.

## Patentansprüche

1. Airbag-Anordnung in einem Kraftfahrzeug, umfassend einen Airbag (2), der in einem Anfangszustand in einer Aufnahmeposition (3) aufgenommen ist, die lateral zu der angenommenen Position (4) des Fahrzeuginsassen versetzt ist, ferner umfassend einen Gurt (5), der mit einem Ende an der Außenseite des Airbags (2) angebracht ist und der ferner an dem Kraftfahrzeug an einem Befestigungspunkt (6) angebracht ist, wobei sich der Gurt (5) von dem aufgenommenen Airbag in der Aufnahmeposition (3) entlang der angenommenen Position (4) des Fahrzeuginsassen zu dem Befestigungspunkt (6) derart erstreckt, dass während eines Entfaltens der Gurt (5) zwischen dem Befestigungspunkt (6) und dem sich entfaltenden Airbag (2) gespannt wird und den Airbag (2) in seine entfaltete Position führt, in der der Airbag (2) vor der angenommenen Position (4) des Fahrzeuginsassen angeordnet ist, wobei die Aufnahmeposition (3) des Airbags (2) in oder nahe der Mitte eines Armaturenbretts (1) ist, und
**dadurch gekennzeichnet, dass**
der Befestigungspunkt (6) des Gurts (5) nahe der lateralen Außenseite des Armaturenbretts (1) ist, die zu der Aufnahmeposition (3) des Airbags (2) lateral versetzt ist.

2. Airbag-Anordnung nach Anspruch 1, wobei der entfaltete Airbag (2) eine asymmetrische Form in Bezug zu seiner Aufnahmeposition (3) hat.

3. Airbag-Anordnung nach einem der vorhergehenden Ansprüche, wobei der Gurt (5) mit beiden Enden an der Außenseite des Airbags (2) befestigt ist und sich wie eine Schlaufe (8) zu dem Befestigungspunkt (6) erstreckt.

4. Airbag-Anordnung nach einem der vorhergehenden Ansprüche, wobei der Gurt (5) in dem Anfangszustand in einem Spalt in einem Armaturenbrett (1) angeordnet ist, der sich von der Aufnahmeposition (3) des Airbags (2) zu dem Befestigungspunkt (6) des Gurts (5) erstreckt.

5. Airbag-Anordnung nach Anspruch 4, wobei der Gurt (5) von einer Abdeckung, einer Dekorationsleiste oder einer Stufe des Armaturenbretts (2) abgedeckt ist.

6. Airbag-Anordnung nach einem der vorhergehenden Ansprüche, wobei die Länge des Gurts (5) zwischen einer Anbringung (7) an dem Airbag (2) und dem Befestigungspunkt (6) derart gewählt ist, dass der entfaltete Airbag (2) in dem entfalteten Zustand gegen eine Fläche eines Teils des Kraftfahrzeugs gedrückt ist.

7. Airbag-Anordnung nach einem der vorhergehenden Ansprüche, wobei die Anbringung (7) des Gurts (5) an dem Airbag (2) in dem entfalteten Zustand auf einem Punkt angeordnet ist, der auf einem lateralen Rand des Airbags (2) liegt, der dem Fahrzeuginsassen zugewandt ist.

## Revendications

1. Assemblage d'airbag d'un véhicule automobile, comprenant un airbag (2) qui, dans un état initial, est rangé dans une position de rangement (3) qui est déplacée latéralement vers la position supposée (4) du passager, comprenant en outre une sangle (5) qui est fixée par une extrémité à l'extérieur de l'airbag (2) et qui est en outre fixée au véhicule automobile a un point de fixation (6), la sangle (5) s'étendant de l'airbag rangé en position de rangement (3) le long de la position supposée (4) du passager jusqu'au point de fixation (6), de sorte que, pendant le déploiement, la sangle (5) est étirée entre le point de fixation (6) et l'airbag se déployant (2) et guide l'airbag (2) dans sa position déployée dans laquelle l'airbag (2) est disposé en face de la position supposée (4) du passager, la position de rangement (3) de l'airbag (2) se trouvant dans le ou à proximité du centre d'un tableau de bord (1), et **caractérisé en ce que** le point de fixation (6) de la sangle (5) est proche de la face extérieure latérale du tableau de bord (1) décalée latéralement vers la position de rangement (3) de l'airbag (2).

2. Assemblage d'airbag selon la revendication 1, dans lequel l'airbag déployé (2) a une forme asymétrique par rapport à sa position de rangement (3).

3. Assemblage d'airbag selon l'une quelconque des revendications précédentes, dans lequel la sangle (5) est fixée par ses deux extrémités à l'extérieur de l'airbag (2) et s'étend sous forme d'une boucle (8) jusqu'au point de fixation (6).

4. Assemblage d'airbag selon la revendication 1, dans lequel, dans l'état initial, la sangle (5) est disposée dans un intervalle d'un tableau de bord (1) s'étendant depuis la position de rangement (3) de l'airbag (2) jusqu'au point de fixation (6) de la sangle (5).

5. Assemblage d'airbag selon la revendication 4, dans lequel la sangle (5) est couverte d'un recouvrement, d'un filet décoratif ou d'un échelon du tableau de bord (2).

6. Assemblage d'airbag selon l'une quelconque des revendications précédentes, dans lequel la longueur de la sangle (5) entre une attache (7) de l'airbag (2) et le coin de fixation (6) est choisie de manière à ce que, dans l'état déployé, l'airbag déployé (2) soit comprimé contre une surface d'une partie du véhicule automobile.

7. Assemblage d'airbag selon l'une quelconque des revendications précédentes, dans lequel, dans l'état déployé, l'attache (5) de la sangle (5) sur l'airbag (2) est disposée à un point situé sur un bord latéral de l'airbag (2) qui fait face au passager.
